# EUROPEAN PATENT APPLICATION

(11) **EP 3 993 223 A1**
(43) Date of publication of application: **04.05.2022**
(21) Application number: 20832176.0
(22) Date of filing: 18.06.2020
(51) Int. Cl.: H02K 1/12

(54) **MOTOR, AND MOTOR CONTROL DEVICE**

(30) Priority: 26.06.2019 JP 2019119083
(71) Applicant: Sony Group Corporation, Tokyo 108-0075 (JP)
(72) Inventor: YOKOYAMA, Kazuto, Tokyo 108-0075 (JP)
(74) Representative: Witte, Weller & Partner Patentanwälte mbB
(86) International application number: PCT/JP2020/024041
(87) International publication number: WO 2020/262204

(57) **Abstract**

A motor (31) includes a stator (313), a rotor (311), and a movable member (315). The stator (313) includes a back yoke (313a) that is annular and a plurality of teeth (313b) that protrude inward in a radial direction from an inner periphery of the back yoke (313a). The rotor (311) is provided on an inner peripheral side of the stator (313). The movable member (315) is a movable member provided along an outer peripheral surface of the back yoke (313a), and changes characteristics of magnetic flux flowing through the back yoke (313a) when the movable member (315) is moved.

## Description

### Field

The present disclosure relates to a motor and a motor control device.

### Background

Conventionally, for example, in mobility such as a kick skater, a so-called in-wheel motor, which is a motor mounted inside a wheel, is known. Also, in this type of motor, there is a demand for expanding the range for an efficient motor operating point (torque and rotation speed). In response to this demand, for example, a technique for making magnetic flux variable by devising the shape of a rotor so that a magnetic flux path bypasses a motor case has been proposed (for example, refer to Patent Literature 1) .

### Citation List

### Patent Literature

Patent Literature 1: JP 2017-28972 A

### Summary

### Technical Problem

However, in the conventional technique, since the rotor shape may be special, the motor structure may be complicated.

Therefore, the present disclosure proposes a motor and a motor control device that can make motor characteristics variable with a simple configuration. Solution to Problem

A motor includes a stator , a rotor , and a movable member . The stator includes a back yoke that is annular and a plurality of teeth that protrude inward in a radial direction from an inner periphery of the back yoke. The rotor is provided on an inner peripheral side of the stator. The movable member is a movable member provided along an outer peripheral surface of the back yoke, and changes characteristics of magnetic flux flowing through the back yoke when the movable member is moved.

### Brief Description of Drawings

FIG. 1 is a schematic diagram illustrating an example of a holding mode of an electric wheel according to an embodiment of the present disclosure.
FIG. 2A is a diagram illustrating a result of analyzing an effect obtained in principle in the present embodiment.
FIG. 2B is a diagram illustrating a result of analyzing an effect obtained in principle in the present embodiment.
FIG. 2C is a diagram illustrating a result of analyzing an effect obtained in principle in the present embodiment.
FIG. 2D is a diagram illustrating a result of analyzing an effect obtained in principle in the present embodiment.
FIG. 2E is a diagram illustrating a result of analyzing an effect obtained in principle in the present embodiment.
FIG. 3 is a diagram for describing a motor, in which a movable member is rotated.
FIG. 4 is a diagram for describing the motor, in which the movable member is rotated.
FIG. 5 is a diagram for describing the motor, in which the movable member is rotated.
FIG. 6 is a diagram for describing the motor, in which the movable member is expanded.
FIG. 7A is a diagram for describing the motor, in which the movable member is expanded.
FIG. 7B is a diagram for describing the motor, in which the movable member is expanded.
FIG. 8A is a diagram for describing the motor, in which the movable member is expanded.
FIG. 8B is a diagram for describing the motor, in which the movable member is expanded.
FIG. 9 is a block diagram illustrating a configuration of a motor control device according to the embodiment.
FIG. 10A is a diagram illustrating an example of efficiency map information.
FIG. 10B is a diagram illustrating an example of motor parameter information.
FIG. 10C is a diagram illustrating an example of the motor parameter information.
FIG. 11 is a flowchart illustrating a procedure of control processing executed by the motor control device according to the embodiment.

### Description of Embodiments

Hereinbelow, embodiments of the present disclosure will be described in detail with reference to the drawings. Note that, in each of the following embodiments, identical components are labeled with the same reference signs, and duplicate description is omitted.

In addition, in the present specification and the drawings, a plurality of components having substantially the same functional configurations may be distinguished by attaching different numbers to the ends of the same reference signs. However, in a case in which it is not particularly necessary to distinguish the plurality of components having substantially the same functional configurations from each other, only the same reference signs are attached.

### <Configuration of Electric Wheel according to Embodiment>

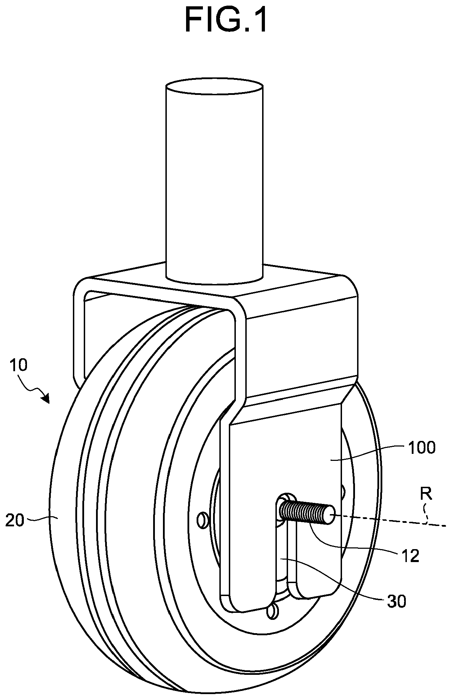

First, a configuration of an electric wheel 10 according to an embodiment of the present disclosure will be described. FIG. 1 is a schematic diagram illustrating an example of a holding mode of the electric wheel according to the embodiment of the present disclosure. In the present disclosure, the electric wheel 10 is mounted on a vehicle such as a two-wheeled vehicle having a structure in which both sides are opened. As the two-wheeled vehicle, for example, a small light vehicle such as an electric kickboard is assumed. Note that the electric wheel 10 may be mounted not only on the two-wheeled vehicle but also on a one-wheeled vehicle or a vehicle having three or more wheels. In addition, the electric wheel 10 may be mounted not only as a wheel of a vehicle but also as a wheel of an electric wheelchair, a mobile robot, or the like.

Also, in the embodiment, the electric wheel 10 mounted on the two-wheeled vehicle is a wheel having a diameter of eight inches (204 mm). The electric wheel 10 includes a wheel unit 20 and a motor control device 30. The motor control device 30 is a device that includes a motor (so-called in-wheel motor) provided inside the wheel unit 20 and controls the motor. A fixed shaft 12 is fixed on both sides of the motor control device 30. The fixed shaft 12 is coaxial with a rotation axis R of the wheel unit 20. The wheel unit 20 rotates with respect to the fixed shaft 12. The electric wheel 10 is held by a support member 100. In the embodiment, the support member 100 is a front fork of a two-wheeled vehicle.

### <Configuration and Operation Principle of General Motor>

Prior to description of a motor according to the embodiment, a configuration and an operation principle of a general motor will be described. Note that an inner rotor type permanent magnet alternating-current synchronous motor is taken as an example of the general motor.

First, a configuration of the general motor will be described. The general motor includes, for example, a stator, a rotor, a housing, an angle sensor, and the like.

The stator includes an iron core (also referred to as a core) and a coil. The iron core is generally formed by stacking thin iron plates called electromagnetic steel plates along the axial direction of the motor, or by hardening a dust core with resin. The coil is a member through which alternating current flows when alternating-current voltage supplied from an external device is applied. Note that an inverter is generally used as the external device. The inverter is a device that generates a waveform of alternating-current voltage from direct-current voltage.

The rotor includes an iron core and a permanent magnet, and a shaft, which is a rotating shaft, passes through the center of the rotor. The rotor rotates about this shaft relative to the stator. Similarly to the iron core of the stator, the iron core of the rotor generally includes a stacked electromagnetic steel plate or a dust core. The magnet is, for example, a permanent magnet, and is mechanically fixed to the rotor by being buried in the rotor core or being attached to the rotor surface.

The housing is a chassis that houses the respective members of the motor, and serves as a case of the entire motor. The housing is mechanically fixed so as not to move relative to the stator. Since the housing does not play a role of a magnetic circuit for motor driving, aluminum or the like is used as a material for the housing.

The angle sensor is used to detect a rotation angle of the rotor (a direction in which the magnet faces). For example, a rotary encoder, a Hall sensor, a resolver, or the like is generally used.

Next, an operation principle of the general motor will be described. In a case of a general three-phase alternating-current motor, the coil has three phases of a U phase, a V phase, and a W phase. In the general motor, when three-phase alternating current flows into the coil, a magnetic field is generated. In the general motor, by combining magnetic fields for the three phases, one rotating magnetic field can be obtained. The phase (current phase) and amplitude of the three-phase alternating current are determined by a control algorithm while the angle sensor is sequentially sensing the magnetic pole direction of the rotor.

Here, there are two types of torque generation principles in the general motor. The first type is a method in which a magnet is provided in the rotating magnetic field to generate torque (magnet torque) with use of a magnetic attraction force. The second type is a method in which an iron core is provided in the rotating magnetic field, lines of magnetic force passing through a magnetic circuit formed by the rotor core and the stator core are distorted, and the lines of magnetic force try to be straight, to generate torque (reluctance torque).

Here, in the magnetic circuit, the lines of magnetic force are always closed curves due to the nature of magnetism. Since the lines of magnetic force have a property of trying to be straight as a physical law, a large force (torque) is generated at positions at which the distortion of the lines of magnetic force is significant. Specifically, in a case of an inner rotor type brushless motor, since the distortion of the lines of magnetic force is significant at gaps (air gaps) between the rotor and the stator, the main torque is generated around the air gaps. In order to generate such torque, the amplitude and phase of the current passing through the coil are controlled in accordance with the rotation angle of the rotor. In addition, the distribution of the magnetic flux density and the lines of magnetic force in the motor changes from moment to moment.

Basically, the generated torque of the motor is proportional to the magnitude of the current. However, in order to generate high torque, when the flowing current and the magnetic field generated accordingly are large as compared with the size of the motor, a phenomenon called magnetic saturation occurs, and the torque is less likely to be generated with respect to the current. When the magnetic saturation occurs, the magnetic permeability of the iron core significantly decreases. Note that the magnetic permeability is a parameter indicating the ease of passing of magnetic flux, that is, a parameter indicating the magnitude of magnetic resistance.

In a case in which the magnetic circuit of the motor is associated with an electric circuit, the state in which the magnetic saturation occurs corresponds to a state in which the resistance of the electric wiring increases to cause the current to hardly flow. At this time, the motor is in a state in which the output of the torque decreases.

In a general electric circuit, the electric resistance does not change greatly (for example, several times) in accordance with a state, but in a magnetic circuit, the magnetic resistance generally changes on the order of several 1000 times in accordance with the amount and distribution of the magnetic flux passing through the stator core. The present invention achieves a variable characteristic motor by focusing on this magnetic characteristic in a magnetic circuit.

Here, the maximum efficiency of a motor reaches an efficiency level of a latter half of 90% in the industry in a case in which the motor is designed with priority on efficiency, and there is little room for further growth. In addition, the general motor has a characteristic that there is one maximum efficiency point and that efficiency decreases as the distance from the maximum efficiency point increases.

On the other hand, in mobility such as an automobile, a required operating point changes in various ways depending on the traveling state. Examples of the required operating point are provided below.
- Low rotation and high torque (at the time of start)
- High rotation and low torque (during cruising)

In this manner, a motor for mobility requires not only performance improvement in terms of maximum efficiency, which is "point", but also efficiency improvement in terms of "surface" in consideration of a frequently used region. However, in the general motor, as a principle of torque generation, high torque and high rotation are in a trade-off relationship with each other. Therefore, in general, in order to satisfy the above two requirements to some extent, the motor is designed so that the efficiency of a region with medium speed rotation and medium torque is high.

Further, conventionally, in order to satisfy the above two requirements, a technique for making motor characteristics variable in accordance with a required operating point has been proposed. Examples of the method for making characteristics variable include a mechanical method, an electric method, and a magnetic method. Since the present embodiment uses the mechanical method, a conventional technique and problems will be described below with a focus on the mechanical method.

Specifically, the conventional mechanical method includes the following three types of method. Each of the methods will specifically be described.
(1) End plate moving method
(2) Iron piece inserting method
(3) Centrifugal force utilizing method

### <(1) End Plate Moving Method>

The end plate moving method is a method of arranging a movable end plate (magnetic body) on a side surface of a rotor. In the end plate moving method, the end plate is brought into close contact with the rotor during high speed rotation to cause the magnetic flux generated from the permanent magnet to be short-circuited. As a result, as the interlinkage magnetic flux to the stator decreases, the torque constant of the motor decreases, and the torque generated with respect to the flowing current decreases. Also, since the induced voltage of the terminal decreases, the operating range on the high-speed side expands (the speed at which the induced voltage balances with the power supply voltage shifts to the high-speed side).

However, in the end plate moving method, since the end plate, which is a movable member, is required to be added to the rotating rotor, the mechanical structure may be complicated. Further, an actuator for driving the end plate is required.

Also, in general, since the size of the motor is theoretically correlated with the torque ("torque" ∝ "square of motor diameter" × "thickness"), it is natural to increase the size of the motor in order to gain torque. However, in the end plate moving motor, the size of the motor is increased in order to reduce the torque and achieve high speed rotation (the end plate is added). Therefore, in the end plate moving method, the size is unnecessarily increased from the viewpoint of the torque generation principle, and thus there is a problem from the viewpoint of size reduction and weight reduction.

### <(2) Iron Piece Inserting Method>

The iron piece inserting method is a method of inserting an iron piece into a flux barrier (a gap provided in a rotor) of a rotor. In the iron piece inserting method, the iron piece is inserted into the rotor by means of an actuator during high speed rotation to cause the magnetic flux of the magnet to be short-circuited. As a result, as the interlinkage magnetic flux to the stator decreases, the torque constant of the motor decreases, and the induced voltage decreases, to achieve high speed rotation.

However, in the iron piece inserting method, since the iron piece is inserted into the rotating rotor, the mechanical structure may be complicated.

### <(3) Centrifugal Force Utilizing Method>

The centrifugal force utilizing method is a method in which an iron piece and a magnet for short-circuiting the magnetic flux are added to a rotor, and a flux barrier is passively changed using the centrifugal force accompanying the rotation of the rotor. In the centrifugal force utilizing method, at the time of low speed rotation, the iron piece for short-circuiting is pushed inward in the radial direction of the rotor by the magnetic force, which brings about a state in which there is almost no effect of short-circuiting the magnetic flux of the magnet. On the other hand, at the time of high speed rotation, the iron piece moves outward in the radial direction by the centrifugal force, and the magnetic flux of the magnet is short-circuited.

However, in the centrifugal force utilizing method, it is necessary to set motor characteristics while finely adjusting the relationship between the moving amount of the iron piece for short-circuiting the magnetic flux and the rotation speed (equivalent to the centrifugal force), which may complicate the motor design.

### <Motor 31 according to Present Embodiment >

Under such circumstances, in the present embodiment, a movable member that can make motor characteristics variable is provided without complicating the structure of the motor.

First, a basic principle and a concept of a motor according to the embodiment will be described.

### <Basic Principle and Concept>

Considering the Fleming's left-hand rule, the torque of the motor can be calculated by the product of the interlinkage magnetic flux to the coil and the current flowing through the coil. In a case in which the relationship among the interlinkage magnetic flux, the current, and the magnetic circuit (such as magnetic resistance) of the motor is expressed as an equivalent model to an electric circuit, the correspondence relationship between magnetism and electricity is as follows.
- Magnetic flux --> current
- Magnetomotive force of permanent magnet --> constant voltage source
- Magnetic resistance of rotor core --> electric resistance
- Magnetic resistance of air gap --> electric resistance
- Magnetomotive force generated by energization to coil --> voltage source (polarity and magnitude change)
- Magnetic resistance of stator core --> electric resistance

From the correspondence relationship, just as the current flowing when the same voltage is applied increases further in a case in which the electric resistance of the electric circuit is lower, the magnetic flux flowing in response to the magnetomotive force generated by energization to the coil increases further in a case in which the magnetic resistance of the magnetic circuit is lower. That is, in a case in which the magnetic resistance of the magnetic circuit is lower, the magnetic flux (interlinkage magnetic flux) passing through the coil increases, and the torque of the motor increases.

On the other hand, when the interlinkage magnetic flux increases, the induced voltage of the motor increases based on Faraday's law of electromagnetic induction. In the general motor, since the current cannot flow into the motor when the induced voltage of the motor and the power supply voltage are balanced, the rotation speed peaks out. Therefore, the motor having low magnetic resistance is of a high-torque and low-rotation type.

Next, in a case of a motor having high magnetic resistance, the magnetic flux flowing through the magnetic circuit decreases, and the interlinkage magnetic flux decreases. Therefore, the torque of the motor decreases. On the other hand, when the interlinkage magnetic flux decreases, the induced voltage decreases, and the maximum rotation speed is thus raised. Therefore, the motor having high magnetic resistance is of a low-torque and high-rotation type.

On the basis of the physical characteristics of the motor described above, the basic principle of the present invention is to change the motor characteristics type into the high-torque and low-rotation type or the low-torque and high-rotation type by changing the magnetic resistance of the magnetic circuit of the motor. The present invention focuses on the stator as a portion of the motor that changes the magnetic resistance. The reason for this is that, since the rotor is a rotating body, the mechanism of the rotor for changing characteristics thereof is more complicated than that of the stator, which is a stationary object. Also, the magnetic resistance changes by changing the width of the air gap, but it is physically difficult to change the shape of the circular tubular air gap in a widely used cylindrical motor (radial gap motor).

Here, the magnetic resistance of a substance (motor) is proportional to the length of a magnetic path (copper wire in an electric circuit), and is inversely proportional to the cross-sectional area and the magnetic permeability of the magnetic path. Since the magnetic permeability depends on the physical properties of the stator core, it is generally difficult to freely change the magnetic permeability. Therefore, in the present embodiment, attention is paid to geometric parameters such as the length and the cross-sectional area of the magnetic path, and in particular, the magnetic resistance of the back yoke portion of the stator is made mechanically variable.

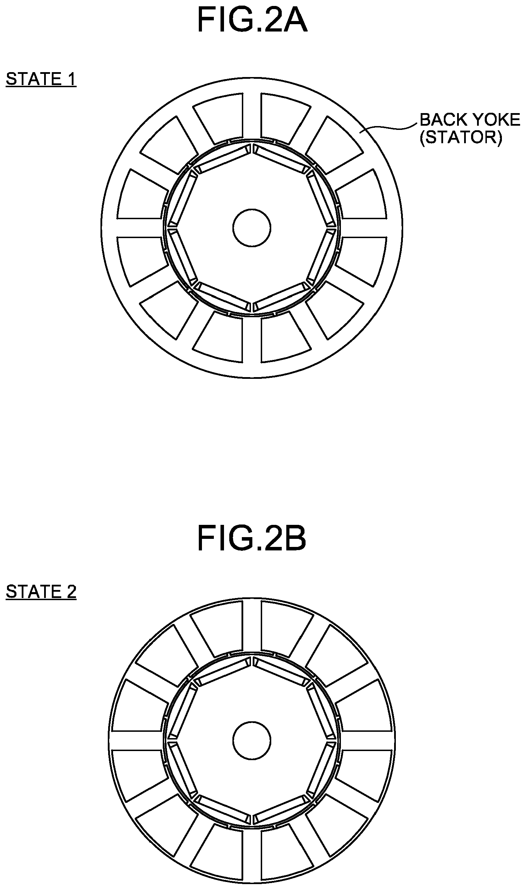

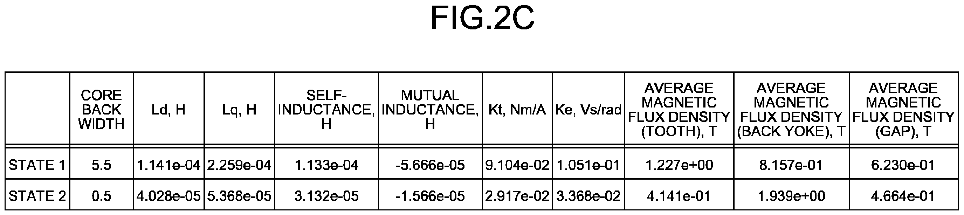

FIGS. 2A to 2E are diagrams illustrating results of analyzing effects obtained in principle in the present embodiment. FIG. 2A illustrates a schematic view (State 1) of a motor in which the back yoke of the stator has a normal thickness, and FIG. 2B illustrates a schematic view (State 2) of a motor in which the back yoke of the stator is extremely thin. That is, State 1 is a state in which the magnetic resistance of the back yoke is lowered, and State 2 is a state in which the magnetic resistance of the back yoke is heightened. Also, FIG. 2C illustrates a result of analyzing motor characteristics of the motors in State 1 and State 2. In both cases, the conditions of the voltage and the current applied to the motor are the same.

As illustrated in FIG. 2C, in a case in which the magnetic resistance of the back yoke is heightened, a torque constant Kt (magnitude of torque generated per unit current) of the motor decreases. That is, the motor in State 1 is of a high-torque type, whereas the motor in State 2 is of a high-rotation type. Also, it can be seen that, in State 2, the air gap magnetic flux density ("average magnetic flux density (gap)") is lower than that in State 1, and the magnetic flux flowing through the magnetic circuit of the motor decreases.

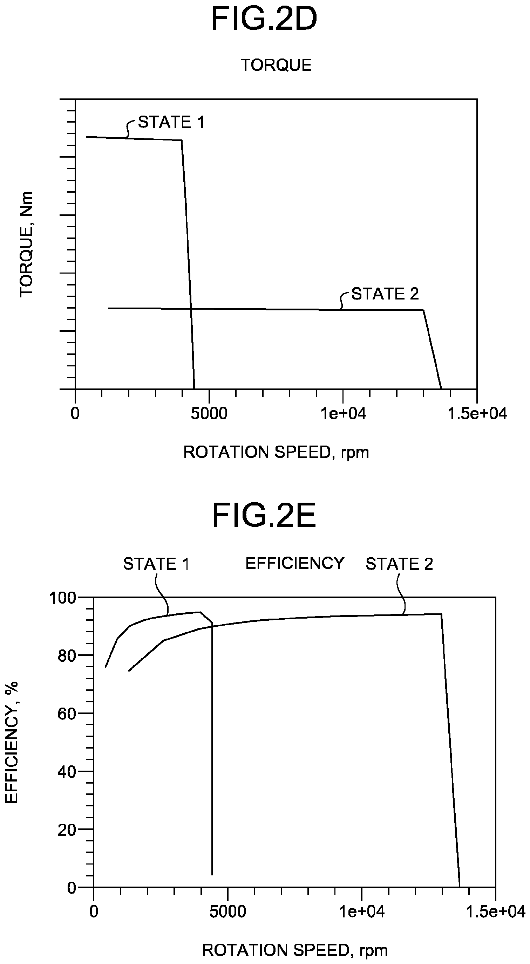

Next, with reference to FIGS. 2D and 2E, results of comparison between State 1 and State 2 in terms of the torque, the rotation speed characteristic, and the efficiency of the motor will be described. FIG. 2D illustrates the relationship between the torque and the rotation speed, and FIG. 2E illustrates the relationship between the rotation speed and the efficiency. As illustrated in FIG. 2D, in State 1, while the maximum rotation speed is lower than that in State 2, the maximum torque is higher. In State 2, while the maximum torque is lower than that in State 1, the maximum rotation speed is higher. In a case in which the back yoke is changed from State 1 to State 2, that is, in a case in which the back yoke is changed to a state with high magnetic resistance, the maximum torque decreases while the maximum rotation speed increases. Also, as illustrated in FIG. 2E, there is no large difference in the maximum efficiency between State 1 and State 2 at the same rotation speed in State 1 and State 2. That is, it can be seen that, even in a case in which the magnetic resistance of the back yoke is made variable, the influence on the efficiency is small.

From the above, it has been confirmed that a variable characteristic motor in which the magnetic resistance of the back yoke of the stator is changed can be achieved in principle. Hereinbelow, a configuration and a control algorithm of a motor in which the magnetic resistance of the back yoke is changed will specifically be described.

In the present embodiment, the magnetic resistance of the back yoke is changed by a movable member provided on the outer peripheral side of the back yoke of the stator. That is, the movable member according to the embodiment changes the characteristics of the magnetic flux flowing in the back yoke.

Two specific examples of the movable member are provided below. Each will specifically be described.
(1) Method of Rotating Movable Member (First Embodiment)
(2) Method of Expanding Movable Member (Second Embodiment)

### <(1) Method of Rotating Movable Member>

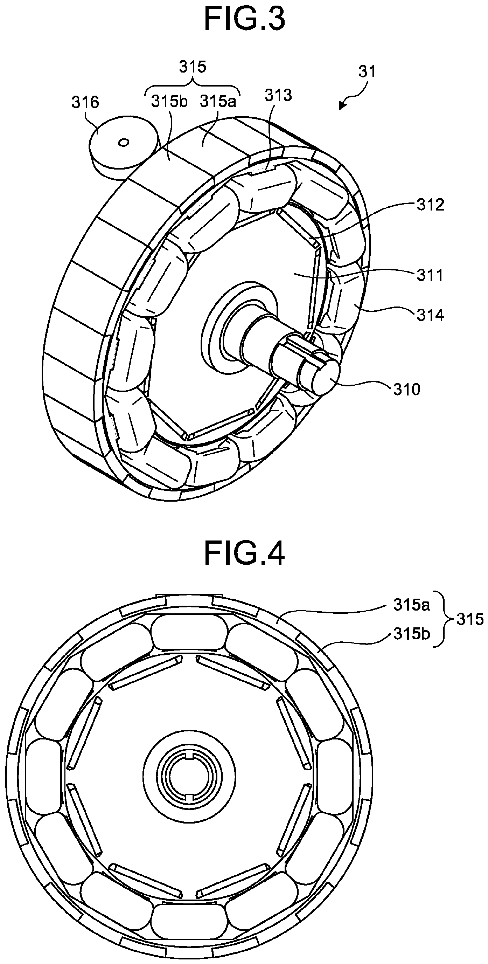

In the first embodiment, a method of rotating a movable member will be described with reference to FIGS. 3 to 5. FIGS. 3 to 5 are diagrams for describing a motor 31, in which a movable member 315 is rotated. As illustrated in FIGS. 3 to 5, the motor 31 according to the first embodiment includes a shaft 310, a rotor 311, a magnet 312, a stator 313, a coil 314, a movable member 315, and an actuator 316. Note that, although the motor 31 further includes general motor components such as a housing and an angle sensor, these components are not illustrated in the present embodiment.

The shaft 310 is a rotation axis serving as a rotation center of the motor 31. The shaft 310 is provided to the fixed shaft 12 (refer to FIG. 1) of the electric wheel 10 so as to be rotatable about the rotation axis R.

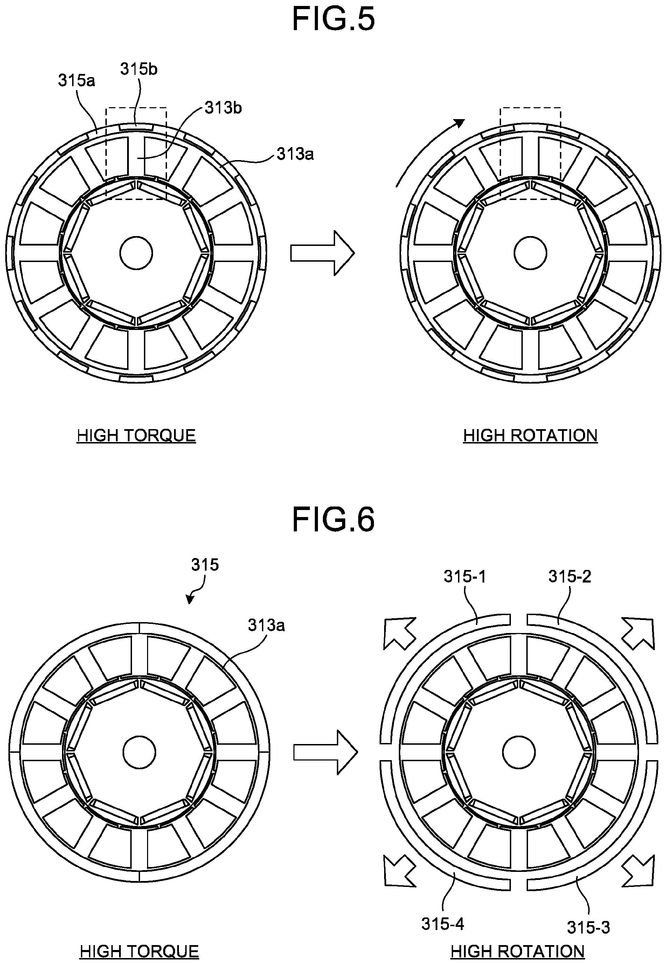

The rotor 311 is a rotor in the motor 31. The rotor 311 includes, for example, a stacked electromagnetic steel plate or a dust core. The rotor 311 is provided on the inner peripheral side of the stator 313. Specifically, the rotor 311 is arranged with a gap (air gap) from a tooth 313b (refer to FIG. 5) of the stator 313.

The magnet 312 is a permanent magnet buried in the rotor 311. Specifically, the magnet 312 is arranged at a position close to the outer periphery of the rotor 311. More specifically, the magnet 312 is a plate-shaped member, and in the present embodiment, the eight magnets 312 are arranged in an octagonal shape in a top view (refer to FIG. 5) .

The stator 313 is a stator in the motor 31. The stator 313 includes an iron core (also referred to as a core). The iron core of the stator 313 is formed by stacking thin iron plates called electromagnetic steel plates along the axial direction of the shaft 310, or by hardening a dust core with resin.

Also, as illustrated in FIG. 5, the stator 313 includes an annular back yoke 313a and a plurality of teeth 313b. In the first embodiment, the back yoke 313a is formed to be as thin as possible. Also, the plurality of teeth 313b are portions protruding inward in the radial direction from the inner periphery of the back yoke 313a. In the present embodiment, a case in which the stator 313 has twelve teeth 313b is illustrated, the number of the teeth 313b may be arbitrary.

The coil 314 is a conductive wire member wound around each of the plurality of teeth 313b. The coil 314 is a member through which alternating current flows when alternating-current voltage supplied from a not-illustrated external device is applied.

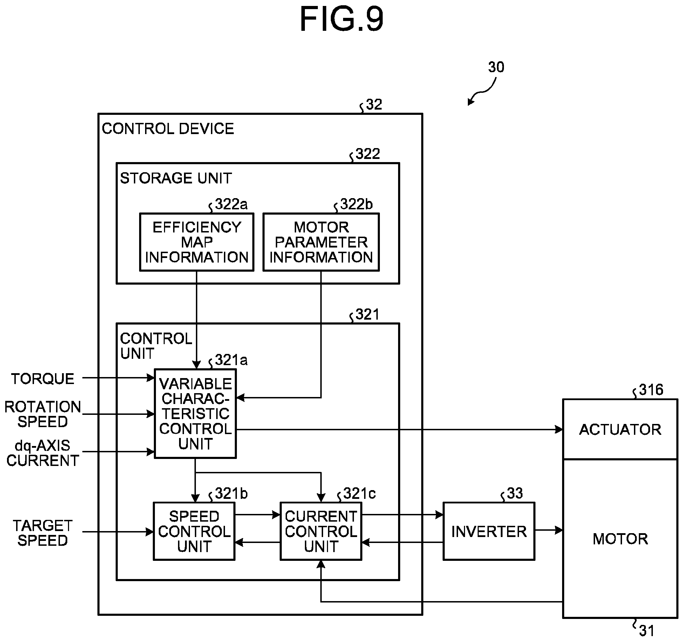

The movable member 315 is a movable member provided along the outer peripheral surface of the back yoke 313a of the stator 313. The movable member 315 is moved by the actuator 316 to change the characteristics of the magnetic flux flowing in the back yoke 313a. Note that the actuator 316 is electronically controlled by a below-mentioned control device 32 (refer to FIG. 9), which will be described below with reference to FIG. 9.

As illustrated in FIG. 4, the movable member 315 according to the first embodiment includes a first portion 315a and a second portion 315b. The first portion 315a has a first magnetic permeability value, and is, for example, a portion having substantially the same magnetic permeability value as the back yoke 313a. The second portion 315b is a portion having a second magnetic permeability value lower than the first magnetic permeability value.

The first portion 315a includes, for example, the same material as the back yoke 313a, that is, an electromagnetic steel plate or the like, and the second portion 315b includes, for example, resin. That is, the first portion 315a and the second portion 315b are materials having different magnetic permeability values. The first portion 315a and the second portion 315b are only required to have different magnetic permeability values, and may have different thicknesses in the radial direction, for example. Specifically, the first portion 315a is configured to have a longer thickness in the radial direction than the second portion 315b.

The first portions 315a and the second portions 315b are alternately arranged in the circumferential direction of the back yoke 313a. The movable member 315 is provided to be rotatable in the circumferential direction of the back yoke 313a.

Specifically, as illustrated in the left diagram of FIG. 5, in a case in which the motor 31 is in a high-torque (low-rotation) mode, each of the second portions 315b of the movable member 315 is arranged as an extension of each of the teeth 313b in the radial direction. That is, the second portions 315b are respectively provided at positions corresponding to the plurality of teeth 313b. Also, the first portion 315a is arranged to be interposed between the second portions 315b. That is, the first portion 315a is provided to correspond to a position between the two adjacent teeth 313b.

In this manner, in the high-torque (low-rotation) mode, the second portion 315b having a low magnetic permeability value is located as an extension of the tooth 313b, and the first portion 315a having a high magnetic permeability value is located at a position corresponding to the magnetic path of the back yoke 313a. Accordingly, the magnetic flux passing through the tooth 313b flows into the magnetic path while being divided into two in the back yoke 313a. However, since the magnetic path in the back yoke 313a is provided with the first portion 315a, the substantial width of the magnetic path is a width obtained by adding the thicknesses of the back yoke 313a and the first portion 315a. Therefore, since the magnetic resistance of the magnetic path in the back yoke 313a does not decrease, motor characteristics in which torque is easily generated, that is, high torque, are obtained.

Then, as illustrated in the right diagram of FIG. 5, in a case in which the mode of the motor 31 is switched from the high-torque mode to a high-rotation (low-torque) mode, the movable member 315 is rotated in the circumferential direction by the actuator 316. Specifically, the movable member 315 is rotated until the positions of the first portion 315a and the second portion 315b are switched with each other.

More specifically, each of the first portions 315a is arranged as an extension of each of the teeth 313b in the radial direction. That is, the first portions 315a are respectively provided at positions corresponding to the plurality of teeth 313b. Also, the second portion 315b is arranged to be interposed between the first portions 315a. That is, the second portion 315b is provided to correspond to a position between the two adjacent teeth 313b.

In this manner, in the high-rotation (low-torque) mode, the first portion 315a having a high magnetic permeability value is located as an extension of the tooth 313b, and the second portion 315b having a low magnetic permeability value is located at a position corresponding to the magnetic path of the back yoke 313a. Accordingly, since the magnetic path in the back yoke 313a is provided with the second portion 315b, the substantial width of the magnetic path is only as thick as the back yoke 313a. As a result, since the width of the magnetic path in the back yoke 313a between the teeth 313b is extremely shortened, the magnetic resistance is increased. Therefore, since the magnetic resistance of the magnetic path in the back yoke 313a is increased, high-rotation motor characteristics are obtained.

Meanwhile, in the first embodiment, although the operation of switching the first portion 315a with the second portion 315b, that is, the case in which the movable member 315 is moved in two stages, has been described, the movable member 315 may be moved in multiple stages. In this case, since the magnetic resistance can be changed gradually in multiple stages, the characteristics of the magnetic flux can be changed more finely.

Note that, in the first embodiment, in a case in which the thicknesses of the first portion 315a and the second portion 315b are to be changed, the thicknesses may be set to gradually change. That is, the thicknesses may be set to be gradually shortened from the first portion 315a toward the second portion 315b.

### <(2) Method of Expanding Movable Member>

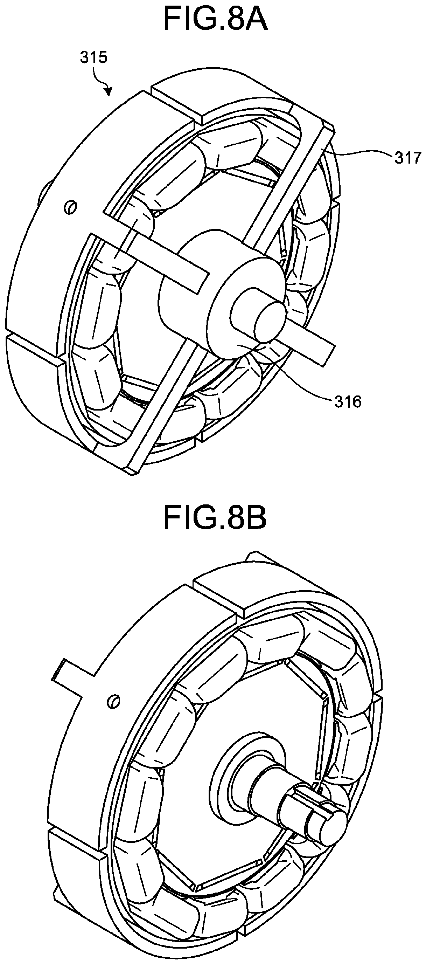

Next, a second embodiment will be described with reference to FIGS. 6 to 8B. The second embodiment differs from the first embodiment in that the movable member 315 is expanded in the radial direction, that is, in terms of a moving method. FIGS. 6 to 8B are diagrams for describing the motor 31, in which the movable member 315 is expanded.

Also, the movable member 315 according to the second embodiment has the same magnetic permeability value as the first portion 315a described above, that is, the same magnetic permeability value as the back yoke 313a. For example, the movable member 315 can be made of the same material as the back yoke 313a.

The movable member 315 according to the second embodiment is provided so as to be contactable with and separable from the outer peripheral surface of the back yoke 313a. Specifically, as illustrated in FIG. 6, the movable member 315 has a plurality of divided portions 315-1 to 315-4 divided in the circumferential direction of the back yoke 313a. FIG. 6 illustrates the divided portions 315-1 to 315-4 obtained by equally dividing the movable member 315 into four. As a result, when the three-phase alternating current flows into the coil 314 wound around the twelve teeth 313b, the teeth 313b can be electromagnetically symmetrical since the three teeth 313b can be in each set. The movable member 315 contacts with and separates from the back yoke 313a by expanding or not expanding the divided portions 315-1 to 315-4.

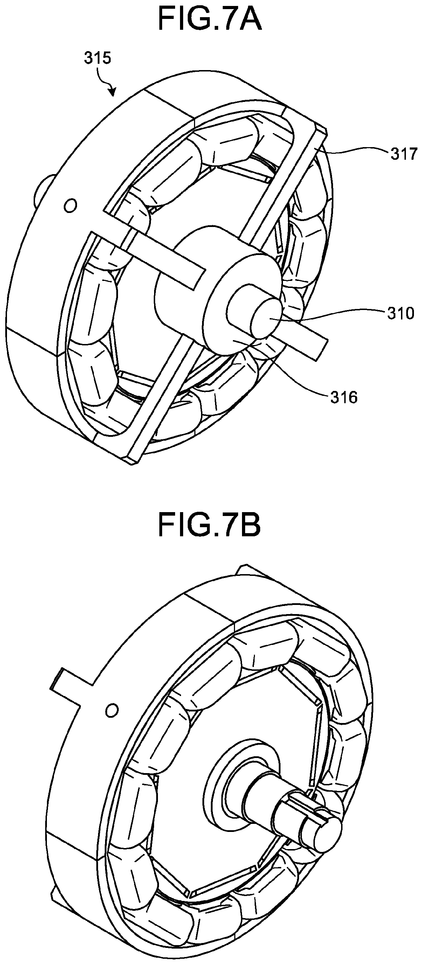

Also, as illustrated in FIGS. 7A to 8B, the actuator 316 is provided on the shaft 310, and is connected to the divided portions 315-1 to 315-4 via a support portion 317. The actuator 316 causes the support portion 317 to reciprocate in the radial direction to bring the movable member 315 into an expanded or non-expanded state.

For example, as illustrated in the left diagram of FIG. 6, in a case in which the motor 31 is in a high-torque (low-rotation) mode, the movable member 315 contacts with the back yoke 313a, and the plurality of divided portions 315-1 to 315-4 are arranged to be connected to each other without being separated from each other. That is, in the high-torque case, the movable member 315 is not expanded.

Accordingly, since the width of the magnetic path in the back yoke 313a is a width obtained by adding the thicknesses of the back yoke 313a and the movable member 315, the magnetic resistance of the magnetic path in the back yoke 313a does not decrease, and motor characteristics in which torque is easily generated are obtained.

Also, as illustrated in the right diagram of FIG. 6, in a case in which the motor 31 is in a high-rotation (low-torque) mode, the movable member 315 is separated from the back yoke 313a as the plurality of divided portions 315-1 to 315-4 move outward in the radial direction. In addition, the plurality of adjacent divided portions 315-1 to 315-4 are separated from each other as the divided portions 315-1 to 315-4 move outward in the radial direction. That is, in the high-rotation case, the movable member 315 is expanded.

As a result, air is interposed between the movable member 315 and the back yoke 313a. The magnetic permeability of air is generally one several thousandth of that of the electromagnetic steel plate (back yoke 313a). That is, when the movable member 315 is separated from the back yoke 313a, the substantial width of the magnetic path in the back yoke 313a is only as thick as the back yoke 313a. As a result, since the width of the magnetic path in the back yoke 313a between the teeth 313b is extremely shortened, the magnetic resistance is increased. Therefore, since the magnetic resistance of the magnetic path in the back yoke 313a is increased, high-rotation motor characteristics are obtained.

Meanwhile, in the second embodiment, the movable member 315 may be moved to be expanded in multiple stages. That is, in the second embodiment, the movable member 315 may be expanded to be gradually separated from the outer peripheral surface of the back yoke 313a. In this case, since the magnetic resistance can be changed gradually in multiple stages, the motor characteristics can be changed more finely.

Next, control processing of the motor control device 30 according to the embodiment will be described with reference to FIGS. 9 to 11. FIG. 9 is a block diagram illustrating a configuration of the motor control device 30 according to the embodiment.

As illustrated in FIG. 9, the motor control device 30 according to the embodiment includes the motor 31, the control device 32, and an inverter 33.

The control device 32 includes a control unit 321 and a storage unit 322. The control unit 321 includes a variable characteristic control unit 321a, a speed control unit 321b, and a current control unit 321c. The storage unit 322 stores efficiency map information 322a and motor parameter information 322b.

Here, the control device 32 includes, for example, a computer including a central processing unit (CPU), a read only memory (ROM), a random access memory (RAM), a data flash, an input/output port, and the like, and various circuits.

The CPU of the computer reads and executes a program stored in the ROM to function as the variable characteristic control unit 321a, the speed control unit 321b, and the current control unit 321c of the control unit 321, for example.

Also, at least one or all of the variable characteristic control unit 321a, the speed control unit 321b, and the current control unit 321c of the control unit 321 can be configured by hardware such as an application specific integrated circuit (ASIC) and a field programmable gate array (FPGA).

Also, the storage unit 322 corresponds to, for example, the RAM and the data flash. The RAM and the data flash can store the efficiency map information 322a, the motor parameter information 322b, information of various programs, and the like. Note that the control device 32 may acquire the above-described programs and various types of information via another computer or a portable recording medium connected via a wired or wireless network.

The variable characteristic control unit 321a updates motor parameters to be used in the speed control unit 321b and the current control unit 321c in real time while driving the actuator 316 included in the motor 31.

Specifically, the variable characteristic control unit 321a acquires information regarding the operating point of the motor 31 (information about torque and rotation speed), and determines the most efficient value for the magnetic resistance at the operating point as a set value on the basis of the acquired information regarding the operating point.

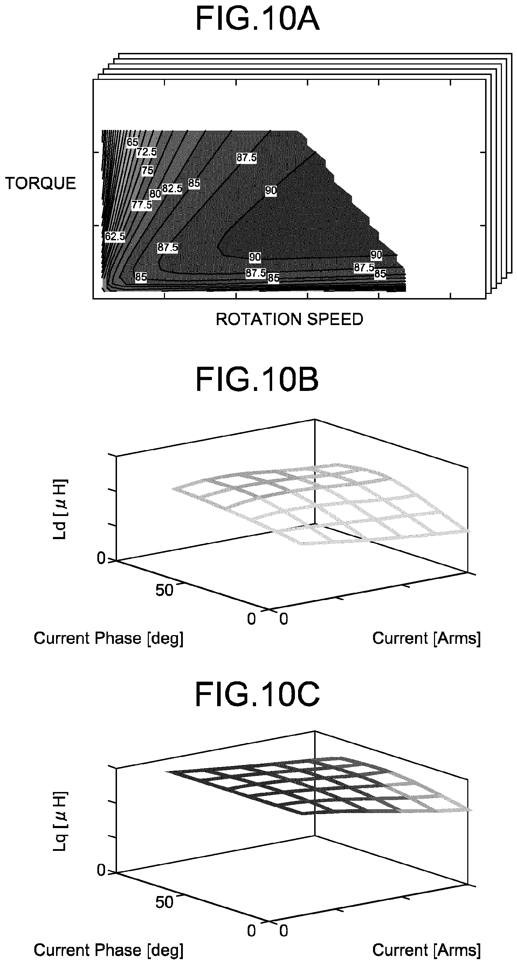

More specifically, the variable characteristic control unit 321a determines the set value for the magnetic resistance on the basis of the efficiency map information 322a stored in the storage unit 322. FIG. 10A is a diagram illustrating an example of the efficiency map information 322a.

As illustrated in FIG. 10A, the efficiency map information 322a is map information indicating the torque on the vertical axis, the rotation speed on the horizontal axis, and the efficiency on the height axis (Z axis), and is set for each magnetic resistance value (for each change stage of the actuator 316). Although FIG. 10A illustrates the efficiency map information 322a for six magnetic resistance values, the number of pieces of efficiency map information 322a, that is, the number of values for the magnetic resistance can arbitrarily be set. Also, each piece of efficiency map information 322a illustrated in FIG. 10A expresses the efficiency with contour lines, and indicates that the efficiency is better as the shading is darker.

The variable characteristic control unit 321a refers to the efficiency map information 322a and determines as a set value the most efficient magnetic resistance value in the case of the torque and the rotation speed in the information regarding the operating point.

The variable characteristic control unit 321a drives the actuator 316 on the basis of the determined set value for the magnetic resistance to move the movable member 315 so that the magnetic resistance in the back yoke 313a becomes the set value.

Note that the variable characteristic control unit 321a may acquire, as the information regarding the operating point of the motor 31, information about actual torque and actual rotation speed from a detection value of the sensor provided in the motor 31, or may acquire information about target torque and target rotation speed based on a command value to the motor 31.

Also, the variable characteristic control unit 321a determines motor parameters to be used in the speed control unit 321b and the current control unit 321c on the basis of the determined set value for the magnetic characteristic. Examples of the motor parameter include stator interlinkage magnetic flux by the magnet 312, d-axis inductance, q-axis inductance, and the like.

Note that the d-axis inductance and the q-axis inductance vary depending on the degree of magnetic saturation of the rotor 311 and the stator 313. Therefore, for the d-axis inductance and the q-axis inductance, it is preferable to generate in advance the motor parameter information 322b associated with d-axis current and q-axis current (a detection value or a command value) strongly correlated with the magnetic saturation.

FIGS. 10B and 10C are diagrams illustrating examples of the motor parameter information 322b. FIG. 10B illustrates the motor parameter information 322b related to the d-axis inductance, and FIG. 10C illustrates the motor parameter information 322b related to the q-axis inductance.

As illustrated in FIG. 10B, the motor parameter information 322b is information in which the d-axis inductance is associated with a d-axis current value (Current [Arms]) and a d-axis current phase (Current Phase [deg]). Also, as illustrated in FIG. 10C, the motor parameter information 322b is information in which the q-axis inductance is associated with a q-axis current value (Current [Arms]) and a q-axis current phase (Current Phase [deg]).

Therefore, the variable characteristic control unit 321a refers to the motor parameter information 322b to determine the d-axis inductance and the q-axis inductance corresponding to the acquired d-axis current and q-axis current as motor parameters, and notifies the speed control unit 321b and the current control unit 321c of the motor parameters.

Accordingly, even in a case in which the motor parameters change by changing the magnetic resistance, the speed control unit 321b and the current control unit 321c to be described later can grasp the change in the motor parameters and can thus take control so that the performance of the motor 31 can be maximized in real time.

The speed control unit 321b calculates target torque to be generated by the motor 31 the following moment on the basis of a difference between acquired target speed and speed based on current rotation speed. The speed control unit 321b also calculates target d-axis current and q-axis current corresponding to the target torque based on the motor parameters acquired from the variable characteristic control unit 321a. The speed control unit 321b then notifies the current control unit 321c of the calculated target d-axis current and q-axis current (hereinbelow may be referred to as target dq-axis current.).

Note that the target speed acquired by the speed control unit 321b may be speed calculated in a higher-order system or speed directly set by the user. Also, the speed control unit 321b may acquire target torque instead of the target speed. In this case, since the processing for calculating the target torque can be dispensed with, the processing load of the speed control unit 321b can be reduced.

The current control unit 321c calculates voltage to be applied to the motor 31 the following moment on the basis of a difference between the target dq-axis current output from the speed control unit 321b and a detection value for dq-axis current detected by a not-illustrated current sensor of the inverter 33. The current control unit 321c then converts the calculated voltage into a gate driving signal for driving a power device of the inverter 33 and outputs the gate driving signal.

As a result, the inverter 33 is driven, voltage is applied to the motor 31, current flows into the coil 314, and torque is finally generated in the motor 31. The current and the rotor angle at this time are detected by sensors and fed back to the variable characteristic control unit 321a, the speed control unit 321b, and the current control unit 321c to cause the motor 31 to be driven while receiving feedback control.

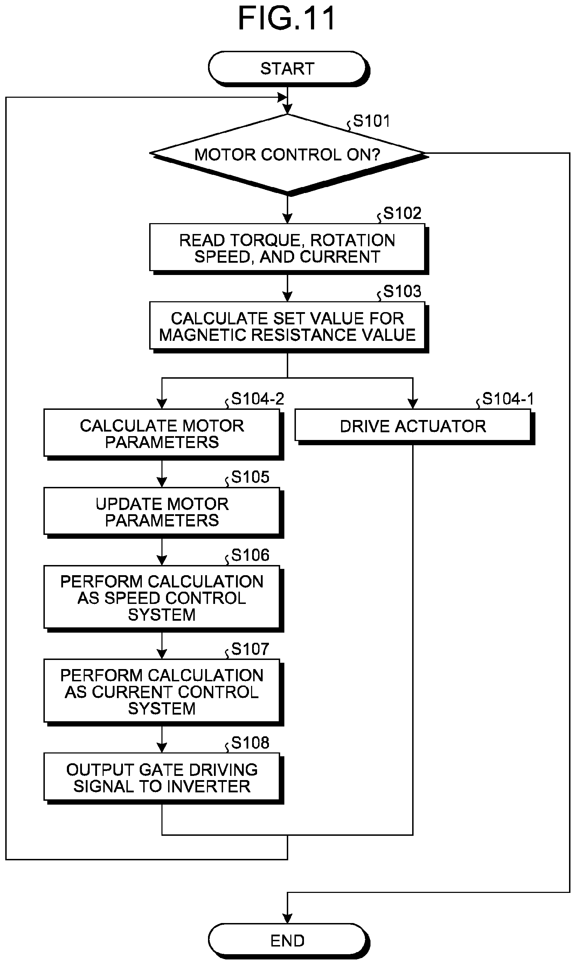

Next, a procedure of control processing executed by the motor control device 30 according to the embodiment will be described with reference to FIG. 11. FIG. 11 is a flowchart illustrating a procedure of control processing executed by the motor control device 30 according to the embodiment.

As illustrated in FIG. 11, the motor control device 30 determines whether or not the control device 32 is ON (Step S101). In the ON case (Step S101: Yes), the variable characteristic control unit 321a reads torque, rotation speed, and dq-axis current (Step S102). In a case in which the control device 32 is OFF (Step S101: No), the motor control device 30 ends the processing.

Subsequently, the variable characteristic control unit 321a calculates a set value for magnetic resistance on the basis of the read torque and rotation speed (Step S103). Subsequently, the variable characteristic control unit 321a drives the actuator 316 on the basis of the set value for the magnetic resistance (Step S104-1), and the processing proceeds to Step S101.

Also, in parallel with Step S104-1, the variable characteristic control unit 321a calculates motor parameters on the basis of the read dq-axis current (Step S104-2). Subsequently, the variable characteristic control unit 321a updates the motor parameters of the speed control unit 321b and the current control unit 321c (Step S105).

Subsequently, the speed control unit 321b performs calculation as a speed control system based on the updated motor parameters (Step S106). Specifically, the speed control unit 321b calculates target torque and target dq-axis current.

Subsequently, the current control unit 321c performs calculation as a current control system based on the updated motor parameters (Step S107). Specifically, the current control unit 321c calculates voltage to be applied to the motor 31 the following moment.

Subsequently, the current control unit 321c converts the calculated voltage into a gate driving signal for driving a power device of the inverter 33 and outputs the gate driving signal (Step S108), and the processing proceeds to Step S101.

### <Use Case>

Next, a use case of the motor 31 and the motor control device 30 according to the embodiment will be described.

In the motor 31 for driving in mobility such as an automobile, a series of processes from start to high-speed cruising is one of situations in which the effectiveness of making the magnetic flux variable in the motor 31 is exhibited.

For example, the speed at the start of the mobility is 0 km/h, and in order to quickly accelerate the speed, the motor 31 with high torque is required. That is, since the motor 31 is required to have characteristics of high torque and low speed rotation, it is appropriate for the movable member 315 in the motor 31 to be in the state of high torque in FIGS. 5 and 6.

When the mobility speed increases, the rotation speed of the motor 31 peaks out (the induced voltage and the power supply voltage are balanced, the current cannot flow into the motor 31, and the torque cannot be generated). Therefore, in order to further increase the speed, the movable member 315 needs to be in a high rotation state.

However, in a case in which the state is suddenly changed from the high torque state to the high rotation state, the efficiency may rapidly drop after the change (for example, a case in which the state is changed from State 1 to State 2 around 4000 rpm in FIG. 2E). Under such circumstances, in the present invention, since the variable characteristic control unit 321a automatically calculates an appropriate moving amount in view of the efficiency characteristic of the motor 31 to move the movable member 315, the motor 31 can be driven highly efficiently.

That is, the variable characteristic control unit 321a takes control so that the movable member 315 may be moved in multiple stages, and so that, when the speed of the mobility finally reaches the maximum speed, the movable member 315 may be in the state of high rotation illustrated in FIGS. 5 and 6. As a result, since the magnetic resistance of the back yoke 313a is high in the high rotation state, high torque required at the start cannot sufficiently be generated, but the mobility can be made to travel at rotation speed that cannot be achieved in the high torque state.

The above is a use case of the motor 31 from start to high-speed cruising. Further, in a use case of a high-speed cruising state, deceleration, and final stop, high efficiency driving can be achieved by following the above processes in reverse.

Also, the above communication program may be stored in a disk device included in a server device on a network such as the Internet so that the communication program can be downloaded to a computer. Also, the above-described function may be fulfilled by cooperation of an operating system (OS) and application software. In this case, a portion other than the OS may be stored in a medium and distributed, or the portion other than the OS may be stored in a server device and downloaded to a computer.

Also, among the pieces of processing described in the above embodiments, all or a part of the pieces of processing described as being performed automatically can be performed manually, or all or a part of the pieces of processing described as being performed manually can be performed automatically by a known method. In addition, the processing procedures, specific names, and information including various data and parameters illustrated in the specification and drawings can arbitrarily be changed unless otherwise specified. For example, the various types of information illustrated in each of the drawings are not limited to the illustrated information.

Also, each of the components of each of the devices illustrated in the drawings is functionally conceptual, and is not necessarily physically provided as illustrated in the drawings. That is, a specific form of distribution and integration of each device is not limited to the illustrated form, and all or a part thereof can functionally or physically be distributed and integrated in an arbitrary unit according to various loads, usage conditions, and the like.

Also, the above-described embodiments can appropriately be combined in a region in which the processing contents do not contradict each other. Also, the order of the respective steps illustrated in the flowchart and the sequence diagram in the above-described embodiments can be changed as appropriate.

### <Wrap-up>

As described above, according to an embodiment of the present disclosure, the motor 31 according to the present embodiment includes the stator 313, the rotor 311, and the movable member 315. The stator 313 includes the back yoke 313a that is annular and the plurality of teeth 313b that protrude inward in a radial direction from an inner periphery of the back yoke 313a. The rotor 311 is provided on an inner peripheral side of the stator 313. The movable member 315 is the movable member 315 provided along an outer peripheral surface of the back yoke 313a, and changes characteristics of magnetic flux flowing through the back yoke 313a when the movable member 315 is moved.

Accordingly, the movement of the movable member 315 can cause the characteristics of the magnetic flux flowing through the back yoke 313a to be changed. Also, by providing the movable member 315 on the outer peripheral side of the stator 313, it is not necessary to change the structures and configurations of the stator 313 and the rotor 311, which can prevent the motor 31 from being complicated. Therefore, the motor 31 according to the embodiment can make motor characteristics variable with a simple configuration.

In the movable member 315 according to the embodiment, a first portion 315a having a first magnetic permeability value and a second portion 315b having a second magnetic permeability value lower than the first magnetic permeability value are alternately arranged in a circumferential direction of the back yoke 313a. The movable member 315 is provided to be rotatable in the circumferential direction of the back yoke 313a.

Consequently, since the magnetic resistance of the back yoke 313a can be changed by rotating the movable member 315, the motor characteristics can be made variable with a simple configuration.

Also, a primary portion out of the first portion 315a and the second portion 315b according to the embodiment is provided at a position corresponding to each of the plurality of teeth 313b, and a secondary portion out of the first portion 315a and the second portion 315b is provided to correspond to a position between the plurality of teeth 313b. The movable member 315 is rotated in the circumferential direction of the back yoke 313a to cause a position of the primary portion and a position of the secondary portion to be switched with each other.

This makes it possible to switch between a state in which the magnetic resistance is high and a state in which the magnetic resistance is low with a minimum rotation distance.

Also, the first portion 315a and the second portion 315b according to the embodiment are materials having different magnetic permeability values.

Accordingly, the magnetic permeability values of the first portion 315a and the second portion 315b can be designed easily.

The first portion 315a and the second portion 315b according to the embodiment have different thicknesses in a radial direction of the back yoke 313a.

Accordingly, the magnetic permeability values of the first portion 315a and the second portion 315b can be designed easily.

Also, the movable member 315 according to the embodiment is provided so as to be contactable with and separable from an outer peripheral surface of the back yoke 313a.

Consequently, since the magnetic resistance of the back yoke 313a can be changed by the movable member 315 contacting and separating, the motor characteristics can be made variable with a simple configuration.

Also, the movable member 315 according to the embodiment has the plurality of divided portions 315-1 to 315-4 divided in the circumferential direction of the back yoke 313a. The plurality of divided portions 315-1 to 315-4 contact with each other in a case in which the movable member 315 contacts with the outer peripheral surface of the back yoke 313a, and the plurality of divided portions 315-1 to 315-4 separate from each other in a case in which the movable member 315 separates from the outer peripheral surface of the back yoke 313a.

The movable member 315 is moved in multiple stages.

This makes it possible to change magnetic flux finely.

The motor control device 30 according to the embodiment includes the motor 31 and the control device 32 that electronically controls the motor. The control device 32 calculates a set value for magnetic resistance in the back yoke 313a on a basis of information regarding an operating point of the motor 31, and moves the movable member 315 in accordance with the set value.

Accordingly, the motor characteristics can be made variable with a simple configuration.

Although the embodiments of the present disclosure have been described above, the technical scope of the present disclosure is not limited to the above-described embodiments, and various modifications can be made without departing from the gist of the present disclosure. Also, the components in the different embodiments and modification examples may appropriately be combined.

Further, the effects of the respective embodiments described in the present specification are illustrative only and are not limited, and other effects may be provided.

Note that the present technique can also employ the following configuration.
(1) A motor comprising:
   a stator that includes a back yoke that is annular and a plurality of teeth that protrude inward in a radial direction from an inner periphery of the back yoke;
   a rotor that is provided on an inner peripheral side of the stator; and
   a movable member that is provided along an outer peripheral surface of the back yoke and changes characteristics of magnetic flux flowing through the back yoke when the movable member is moved.
(2) The motor according to (1),
   wherein, in the movable member, a first portion having a first magnetic permeability value and a second portion having a second magnetic permeability value lower than the first magnetic permeability value are alternately arranged in a circumferential direction of the back yoke, and
   wherein the movable member is provided to be rotatable in the circumferential direction of the back yoke.
(3) The motor according to (2),
   wherein a primary portion out of the first portion and the second portion is provided at a position corresponding to each of the plurality of teeth,
   wherein a secondary portion out of the first portion and the second portion is provided to correspond to a position between the plurality of teeth, and
   wherein the movable member is rotated in the circumferential direction of the back yoke to cause a position of the primary portion and a position of the secondary portion to be switched with each other.
(4) The motor according to (2) or (3),
   wherein the first portion and the second portion are materials having different magnetic permeability values.
(5) The motor according to any one of (2) to (4),
   wherein the first portion and the second portion have different thicknesses in a radial direction of the back yoke.
(6) The motor according to any one of (1) to (5),
   wherein the movable member is provided so as to be contactable with and separable from an outer peripheral surface of the back yoke.
(7) The motor according to (6),
   wherein the movable member has a plurality of divided portions divided in the circumferential direction of the back yoke,
   wherein the plurality of divided portions contact with each other in a case in which the movable member contacts with the outer peripheral surface of the back yoke, and
   wherein the plurality of divided portions separate from each other in a case in which the movable member separates from the outer peripheral surface of the back yoke.
(8) The motor according to any one of (1) to (7),
   wherein the movable member is moved in multiple stages.
(9) A motor control device comprising:
   the motor according to claim 1; and
   a control device that electronically controls the motor,
   wherein the control device calculates a set value for magnetic resistance in the back yoke on a basis of information regarding an operating point of the motor, and moves the movable member in accordance with the set value.

### Reference Signs List

- 10: ELECTRIC WHEEL
- 20: WHEEL UNIT
- 30: MOTOR CONTROL DEVICE
- 31: MOTOR
- 32: CONTROL DEVICE
- 33: INVERTER
- 100: SUPPORT MEMBER
- 310: SHAFT
- 311: ROTOR
- 312: MAGNET
- 313: STATOR
- 313a: BACK YOKE
- 313b: TOOTH
- 314: COIL
- 315: MOVABLE MEMBER
- 315a: FIRST PORTION
- 315b: SECOND PORTION
- 315-1 to 315-4: DIVIDED PORTION
- 316: ACTUATOR
- 317: SUPPORT PORTION
- 321: CONTROL UNIT
- 321a: VARIABLE CHARACTERISTIC CONTROL UNIT
- 321b: SPEED CONTROL UNIT
- 321c: CURRENT CONTROL UNIT
- 322: STORAGE UNIT
- 322a: EFFICIENCY MAP INFORMATION
- 322b: MOTOR PARAMETER INFORMATION

## Claims

1. A motor comprising:
a stator that includes a back yoke that is annular and a plurality of teeth that protrude inward in a radial direction from an inner periphery of the back yoke;
a rotor that is provided on an inner peripheral side of the stator; and
a movable member that is provided along an outer peripheral surface of the back yoke and changes characteristics of magnetic flux flowing through the back yoke when the movable member is moved.

2. The motor according to claim 1,
wherein, in the movable member, a first portion having a first magnetic permeability value and a second portion having a second magnetic permeability value lower than the first magnetic permeability value are alternately arranged in a circumferential direction of the back yoke, and
wherein the movable member is provided to be rotatable in the circumferential direction of the back yoke.

3. The motor according to claim 2,
wherein a primary portion out of the first portion and the second portion is provided at a position corresponding to each of the plurality of teeth,
wherein a secondary portion out of the first portion and the second portion is provided to correspond to a position between the plurality of teeth, and
wherein the movable member is rotated in the circumferential direction of the back yoke to cause a position of the primary portion and a position of the secondary portion to be switched with each other.

4. The motor according to claim 2,
wherein the first portion and the second portion are materials having different magnetic permeability values.

5. The motor according to claim 2,
wherein the first portion and the second portion have different thicknesses in a radial direction of the back yoke.

6. The motor according to claim 1,
wherein the movable member is provided so as to be contactable with and separable from an outer peripheral surface of the back yoke.

7. The motor according to claim 6,
wherein the movable member has a plurality of divided portions divided in the circumferential direction of the back yoke,
wherein the plurality of divided portions contact with each other in a case in which the movable member contacts with the outer peripheral surface of the back yoke, and
wherein the plurality of divided portions separate from each other in a case in which the movable member separates from the outer peripheral surface of the back yoke.

8. The motor according to claim 1,
wherein the movable member is moved in multiple stages.

9. A motor control device comprising:
the motor according to claim 1; and
a control device that electronically controls the motor,
wherein the control device calculates a set value for magnetic resistance in the back yoke on a basis of information regarding an operating point of the motor, and moves the movable member in accordance with the set value.
